# EUROPEAN PATENT APPLICATION

(11) **EP 1 587 322 A2**
(43) Date of publication of application: **19.10.2005**
(21) Application number: 05009565.2
(22) Date of filing: 08.09.1997
(51) Int. Cl.: H04N 7/173

(54) **Broadcasting system and information broadcast receiving terminal apparatus used therein**

(30) Priority: 27.09.1996 JP 25689296
(62) Divisional of application: 97306950.3
(71) Applicant: MATSUSHITA ELECTRIC INDUSTRIAL CO., LTD., Kadoma-shi, Osaka 571-0050 (JP)
(72) Inventor: Harada, Takenosuke, Yokohama (JP); Machida, Kazuhiro, Inzai-shi, Chiba-ken (JP); Kandaka, Isao, Hirakata-shi Osaka (JP); Usui, Akira, Takatsuki-shi Osaka (JP)
(74) Representative: Leeming, John Gerard

(57) **Abstract**

In a broadcasting system including a center and an information broadcast receiving terminal apparatus, contents data of services of each of various data and service additional information in which information relating to these services is described are made in the center. The contents data of services and the service additional information are broadcasted from a service providing apparatus provided in the center. The information broadcast receiving terminal apparatus receives and accumulates the contents data of services and the service additional information therein. When a user of the information broadcast receiving terminal apparatus regenerates the contents data of services and the service additional information to view the program, the information broadcast receiving terminal apparatus provides an additional service on the basis of the service additional information. The service providing apparatus of the center broadcasts coupon indirect information used to issue a coupon, and the information broadcast receiving terminal apparatus of the viewer receives and accumulates the coupon indirect information to issue a coupon.

## Description

The present invention relates to a broadcast system and an information broadcast receiving terminal apparatus used therein, more specifically, a broadcasting system and an information broadcast receiving terminal apparatus used therein, which can improve a degree of freedom of issuing a coupon attached to a program or given to a viewer, and increase a frequency in use of the coupon.

Development of communicating technique and data processing technique enables digitalization of multi-media information such as audio information, visual information and the like, and such information is provided to the users. With the advent of storage media in large capacities, a broadcast system can transmit a large amount of data using facilities for broadcast or communication, and a terminal apparatus on the user's side can receive and store the data, and display it at an arbitrary timing.

As a known technique for a broadcast system, program data includes at least either contents data of a broadcast program to be viewed by viewers or control data for controlling the broadcast program, and is transmitted from a center. The transmitted program data is received by a receiving terminal, stored in a predetermined storage medium on the view's side, and read out from the storage medium at an arbitrary timing so as to be viewed by a user of the receiving terminal. There is also another technique of delivering a program used to process a broadcast program, in which the broadcast program data and the program are configured to one or more objects and the data is delivered by the object as a unit. By delivering the program as above, it is intended to increase a degree of variation of contents to be displayed in the above technique. The above broadcast program is, in general, charged. As a manner of charging, a fixed charged is adopted when a broadcast program is broadcasted or a service is sold. In order to vary the manner of charging, a ticket is used to discount a charge on the user, for example. In which case, a ticket descriptor is defined in CA and SI/EPG. The ticket is registered by an information provider in CA and SI/EPG compiler. At this time, the SI/EPG compiler receives information about requirements to transmit the ticket, a ticket type, a ticket amount and the like. When that a ticket is transmitted to a viewer of a pay-per-view program is registered, the SI/EPG compiler arranges the ticket descriptor in a present following EIT corresponding to the program. When the viewer watches the program, the coupon is used by the viewer if necessary.

The above known system can deliver a program, varies contents of a display by executing the program to widen its variation. When the contents data of the program is regenerated and displayed on the side of the receiving terminal apparatus, only the contents of the program, that is, a main part, are regenerated and displayed. As to the program service, the service charge is fixed, and transaction is made at a fixed amount. Further, a sponsor or an advertiser cannot intervene in a charged service. Namely, if the number of channels increase, a burden on the user also increases. As a result, it is difficult to increase the number of customers only by pay-per-channel or pay-per-view. The user cannot participate for a program using a coupon. When an interactive service where a voting is interactively done as a part of a participation program is provided, it is impossible to weight a vote in the interactive voting. Further, there is no idea of linking a coupon with program information obtained through another media.

In the light of the above problems, an object of the present invention is to provide a broadcasting system and an information broadcasting receiving terminal apparatus used therein, which can present a coupon in order to preferentially discount a charged service or a program as an award to a viewer from a sponsor when the viewer retrieves a program by operating an EPG, or answer a questionnaire or a quiz in an information broadcasting system, whereby the market is activated.

Another object of the present invention is to provide a broadcasting system and an information broadcast receiving terminal apparatus used therein, which can increase a degree of freedom of issuing a coupon when the coupon is given to a program or a user.

Still another object of the present invention is to provide a broadcasting system and an information broadcast receiving terminal apparatus, which can increase a frequency of use or degree of use of coupons given to a program or the user.

The present invention therefore provides a method for issuing a coupon in a broadcasting system including a center and at least one information broadcast receiving terminal apparatus, comprising the steps of providing a service providing apparatus in the center, making contents data of services of each of various programs configured with video information, sound information, character information and the like transmitted by a broadcasting means, and service additional information in which information relating to the services is described as attribute information, broadcasting the contents data of the services and the service additional information as data of each of the various programs from the service providing apparatus, receiving the contents data of the services and the service additional information by the information broadcast receiving terminal apparatus of a viewer and accumulating the same in the information broadcast receiving terminal apparatus, regenerating the contents data of the services or the service additional information received by the information broadcast receiving terminal apparatus to provide additional services on the basis of the service additional information when the viewer views the program, broadcasting coupon indirect information used to issue a coupon as the contents data of the services from the service providing apparatus of the center, and receiving and accumulating the coupon indirect information by the information broadcast receiving terminal apparatus and accumulating the same in the information broadcast receiving terminal apparatus, thereby issuing the coupon.

The present invention also provides an information broadcast receiving terminal apparatus used in a broadcasting system including a center and the information broadcasting receiving terminal apparatus comprising a receiving unit for receiving contents data of services of each of various programs and service additional information broadcasted as data of each of various program from a service providing apparatus provided in the center, the contents data of each of various programs being configured with video information, sound information, character information and the like to be transmitted from a broadcasting means of the center and the service additional information being described therein information relating to the services as attribute information, the contents data of services and the service additional information being made in the center, a storing unit for storing the contents data of services and the service additional information received by the receiving unit, an information managing unit for managing the contents data of services and the service additional information stored in the storing unit separately from each other, a regenerating unit for regenerating the contents data of services and the service additional information stored in the storing unit at an arbitrary timing to regenerate them, a coupon indirect information accumulating unit for accumulating coupon indirect information broadcasted as information used to issue a coupon as the contents data of services received from the service providing apparatus of the center by the receiving unit, and an issuing unit for issuing the coupon on the basis of the coupon indirect information accumulated in the coupon indirect information accumulating unit.

According to this invention, when a coupon is issued, the coupon is not sent uniformly to all viewers over the broadcast, but the coupon is revealed by taking a certain action or operating a key by the viewer, whereby a degree of freedom of issuing the coupon can be increased.

Examples of embodiments of the invention are described below with reference to the accompanying drawings in which:
FIG. 1 is a schematic block diagram showing a concept of a basic structure of a broadcasting system according to this invention;
FIG. 2 is a diagram showing an example of a structure of service additional information for a program broadcast used in the broadcasting system of this invention;
FIG. 3 is a diagram showing a data format of send coupon information used in the broadcasting system of this invention;
FIG. 4 is a diagram showing a data format of return coupon information used in the broadcasting system of this invention;
FIG. 5 is a diagram showing a data structure of the coupon information when the coupon information is broadcasted as broadcast data in the broadcasting system of this invention, and illustrating a method of taking out the coupon information;
FIG. 6 is a diagram showing an example of a display screen when contents of a program table for guiding programs are displayed in the broadcasting system of this invention;
FIG. 7 is a block diagram showing the information broadcast receiving apparatus used in the broadcasting system of this invention;
FIG. 8 is a block diagram showing a hardware structure and a software structure of the information broadcast receiving terminal apparatus, used to conduct processes on a coupon according to this invention;
FIG. 9 is a diagram showing an example of a print used to notify a coupon code to users according to a first embodiment of this invention;
FIG. 10 is a diagram showing a screen of a detailed program guide displayed on a display screen of the information broadcast receiving terminal apparatus when coupon information is broadcasted and received by the information broadcast receiving apparatus according to the first embodiment;
FIG. 11 is a diagram showing a browser screen displayed when the user makes an answer according to the first embodiment;
FIG. 12 is a diagram showing a window used to input a coupon code or an answer to a questionnaire or quiz by the user according to the first embodiment;
FIG. 13 is a diagram showing an example of a screen displaying a wallet function of the information broadcast receiving terminal apparatus according to a third embodiment of this invention;
FIG. 14 is a diagram for illustrating operations of reserving a program by a user and transferring the reservation information along with a coupon to another user according to a fifth embodiment of this invention;
FIG. 15 is a diagram for illustrating operations of voting by a user in a participation program with a coupon possessed by the user as a stake, and settling according to a result of the voting; and
FIGS. 16A through 16C are diagrams showing a program broadcast broadcasted along a time axis when a user votes with points, an information broadcast broadcasted along the time axis simultaneously with the program broadcast when the user votes with points, and a state of a display screen of a display apparatus of the information broadcast receiving terminal apparatus while the program broadcast and the information broadcast are broadcasted when the user votes with points, respectively.

As a first aspect of this invention, in a broadcasting system including a center and at least an information broadcast receiving terminal apparatus, contents data of services of each of various programs to be transmitted by a broadcasting means configured with video information, sound information, character information and the like and service additional information in which information relating to these services is described as attribute information are made in the center. The contents data of services and the service additional information are transmitted as data of each of various programs are broadcasted from a service providing apparatus provided in the center. The information broadcast receiving terminal apparatus receives the contents data of services and the service additional information, and accumulates them therein. When a user of the information broadcast receiving terminal apparatus regenerates the contents data of services and the service additional information accumulated in the information broadcast receiving terminal apparatus to view the program, the information broadcast receiving terminal apparatus provides an additional service on the basis of the service additional information. On the other hand, the service providing apparatus of the center broadcasts coupon indirect information used to issue a coupon as the contents data of services. The information broadcast receiving terminal apparatus of the viewer receives and accumulates the coupon indirect information to issue a coupon.

With the above structure, when the coupon is issued, the coupon is not sent uniformly to all viewers over the broadcast, but the coupon is revealed by taking a certain action or operating a key by the viewer, whereby a degree of freedom of issuing the coupon is increased.

In the above broadcasting system, if the coupon indirect information has one or more pieces of information corresponding to a service which can issue a coupon, and coupon indirect information corresponding to an arbitrary service is accumulated when the service is broadcasted or regenerated from a storing unit of the information broadcast receiving terminal apparatus and displayed, the information broadcast receiving terminal apparatus notifies coupon information to the viewer.

The above broadcasting system may broadcast a direct mail. In which case, if the coupon indirect information has one or more pieces of information corresponding to a direct mail which can issue a coupon, and if the coupon indirect information corresponding to an arbitrary direct mail is accumulated when the direct mail is broadcasted or regenerated from the storing unit and displayed, the information broadcast receiving apparatus notifies the coupon information to the viewer.

In the above broadcasting system, an arbitrary coupon code may be given to a coupon. In which case, the coupon code is notified to viewers by inserting the coupon code in media other than broadcasting. The information broadcast receiving terminal apparatus issues a coupon when the viewer input the coupon code into the information broadcast receiving terminal apparatus.

In the above broadcast system, a coupon code used to issue a coupon on the basis of the coupon indirect information corresponding to an arbitrary service may be broadcasted simultaneously when the service is broadcasted. In which case, the information broadcast receiving terminal apparatus receiving not only the service but also the coupon code corresponding to the service simultaneously, thereby issuing the coupon.

In the above broadcasting system, when the coupon information is notified to the viewer or a coupon is issued on the basis of a coupon code, whether the coupon information is notified or whether the coupon is issued may be judged on the basis of viewer information such as a view record, taste information or the like accumulated in the information broadcast receiving terminal apparatus.

The above broadcasting system may further have a remote controller to which an identification number or the like for identifying a dealer or the like is given to issue or use a coupon. A coupon may be issued on the basis of the identification number transmitted from the remote controller, or an amount to be discounted may be varied according to the identification number.

In the above broadcasting system, the identification number may be stored in an IC card.

In the above broadcasting system, the coupon indirect information may include coupon classification information. In which case, issued coupons are structurally managed in the information broadcast receiving terminal apparatus.

In the above broadcasting system, when a coupon is used, an amount corresponding to the used coupon may be reduced on the basis of use record information accumulated in the information broadcast receiving terminal apparatus.

In the above broadcast system, in a pay-per-view service, a coupon may be designated when the pay-per-view service is used, whereby an amount corresponding to the coupon is reduced in the charge.

In the above broadcast system, a use of the pay-per-view service corresponding to a coupon may be reserved by using the coupon by the viewer.

In the above broadcast system, a coupon may have at least two values which are a current value and a discount value. In which case, the discount value is reduced from the current value each time the coupon is used.

In the above broadcasting system, the coupon may have only a current value, whereas the service may have a discount value unique to that service. In which case, by designating the coupon when the service is used, the discount value unique to the service is reduced from the current value given to the coupon.

In the above broadcast system, a coupon may have address information of an issuer of the coupon. In which case, personal information and the like of a viewer is notified to the issuer of the coupon when the coupon is used by the viewer.

In the above broadcast system, the information broadcast receiving terminal apparatus of a viewer may transmit a request of the viewer to the center over a telephone line. In which case, the service providing apparatus of the center broadcasts arbitrary coupon indirect information in response to the request of the viewer. On the other hand, the information broadcast receiving terminal apparatus accumulates information relating to a use record of the viewer. When the information broadcast receiving terminal apparatus transmits the request of the viewer, the information broadcast receiving terminal apparatus adds an amount corresponding to a coupon to be broadcasted to the user record of the user, and makes a request the center to broadcast the coupon indirect information along with information about information of a destination of the coupon, a type of the coupon and an amount of the coupon. The service providing apparatus broadcasts the coupon indirect information in response to the request of the viewer. The information broadcast receiving terminal apparatus receiving the coupon indirect information judges whether the coupon indirect information is addressed to itself or not, and issue the coupon if the coupon indirect information is addressed to itself.

In the above broadcasting system, the use record may be managed in the service providing apparatus of the center, instead of the information broadcast receiving terminal apparatus. In which case, the information broadcast receiving terminal apparatus requests the service providing apparatus over the telephone line to add an amount corresponding to a coupon to the user record of a viewer who makes the request to broadcast the coupon, whereby the service providing apparatus updates data of the use record in response to the request.

In the above broadcasting system, the coupon indirect information corresponding to each broadcast program may be broadcasted. In which case, a coupon code used to issue a coupon corresponding to a program is broadcasted simultaneously when the program is broadcasted. The information broadcast receiving terminal apparatus confirms whether the coupon is issued or not so as to research a view record of the broadcast program.

In the broadcasting system, classification information included in the coupon indirect information may be specified to certain contents in the research on the view record of the broadcast program, thereby classifying coupons.

In the above broadcasting system, the classification information included in the coupon indirect information may be specified to information of a sponsor providing the broadcast program, thereby classifying the coupons.

With the above structure, it is possible to use a key code when the coupon is revealed, or transfer or present a coupon to another user. The user can enjoy data broadcasts in various ways. Further, it is possible for the user to vote using a coupon in a quiz program or the like, whereby various ways of voting become possible.

Although the known technique can provide only uniform services by designating an ID so that the services are quite limited, it is possible, according to this invention, to select objects of services under various requirements to provide the services. If a different effect is brought depending on the object in the case of advertisement, for example, distribution of the coupon is adjusted considering attributes of the viewers so that advertisement with the coupon is sent to optimum viewers, and another coupon is further sent the viewers on the basis of a view record. It is thereby possible to advertise in the most suitable way (namely, it is possible to bring the largest effect with a minimum advertising cost). It is also possible to realize information distribution and service distribution in the most suitable way.

As a second aspect of this invention, an information broadcast receiving terminal apparatus is used in a broadcasting system having a center and said information broadcast receiving apparatus. In the center, contents data of services of each of various program to be transmitted by a broadcasting means configured with video information, sound information, character information and the like and service additional information in which information relating to these services is described as attribute information is described are made. The information broadcast receiving apparatus has a receiving unit for receiving the contents data of services and the service additional information broadcasted as data of said program from the service providing apparatus in the center, a storing unit for storing the received contents data of services and the service additional information, an information managing unit for managing the contents data of services and the service additional information accumulated in the storing unit separately from each other, and a regenerating unit for reading out the contents data of services and the service additional information accumulated in the storing unit at an arbitrary timing to regenerate them. The service providing apparatus in the center broadcasts coupon indirect information used to issue a coupon as the contents data of services, and the receiving unit receives the coupon indirect information. The information broadcast receiving terminal apparatus further has a coupon indirect information accumulating unit for accumulating the received coupon indirect information, and an issuing unit for issuing a coupon on the basis of the coupon indirect information accumulated in the coupon indirect information accumulating unit.

The above information broadcast receiving terminal apparatus may further have a coupon information notifying unit for notifying coupon information to a viewer. In which case, the coupon information notifying unit notifies the coupon information to the viewer if coupon indirect information corresponding to an arbitrary service is accumulated when the service is broadcasted or regenerated from the storing unit and displayed.

In the above information broadcast receiving terminal apparatus, the receiving unit may have a function of receiving a direct mail, whereas the storing unit may have a function of accumulating the direct mail. In which case, the coupon information notifying unit notifies the coupon information to the viewer if the coupon indirect information corresponding to an arbitrary direct mail is accumulated when the direct mail is broadcasted or regenerated from the storing unit and displayed.

The above information broadcast receiving terminal apparatus may further have a coupon code decrypting unit for decrypting a coupon code, and an arbitrary coupon code may be given to a coupon. In which case, the coupon code decrypting unit decrypts a coupon code when the coupon code is inputted, thereby issuing a coupon.

The above information broadcast receiving terminal apparatus may further have a viewer information accumulating unit for accumulating information of the viewer, and a controlling unit for judging whether the coupon information is notified or whether a coupon is issued on the basis of the viewer information.

The above information broadcast receiving terminal apparatus may further have a remote controller for inputting a coupon code.

In the above information broadcast receiving terminal apparatus, an identification number used to identify a viewer or a dealer may be given to the remote controller.

In the above information broadcast receiving terminal apparatus, the coupon code decypting unit may decrypt the identification number transmitted from the remote controller as a coupon code, whereby a coupon is issued, or an amount to be discounted is varied when the coupon is used, on the basis of the identification number.

In the above information broadcast receiving terminal apparatus, the identification number may be stored in an IC card.

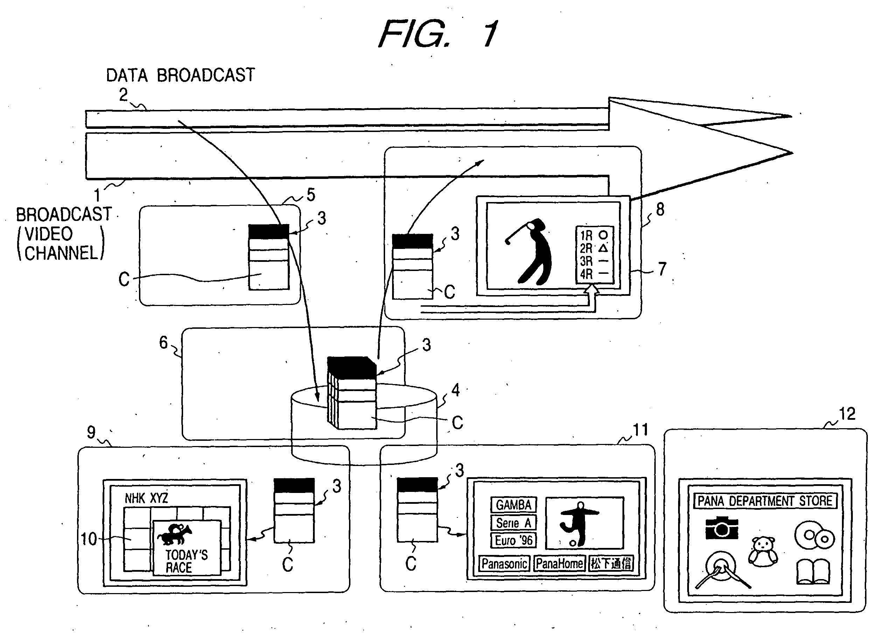

Now, description will be made of embodiments of this invention referring to the drawings. FIG. 1 is a schematic block diagram showing a basic conceptual structure of a broadcasting system, which is a premise of this invention. FIG. 1 shows a course from that service additional information is broadcasted as a data broadcast from a center to that the data is used. In FIG. 1, reference numeral 1 denotes a broadcast of a video channel, and 2 a data broadcast broadcasted simultaneously with the video channel broadcast. Information such as EPG (Electronic Program Guide; a program guide table provided by a broadcast service) and the like is always repeatedly broadcasted, whose data is monitored. According to this invention, the service additional information 3 is defined in the above various information. The service additional information describes features of a service and a relationship between the services with respect to contents data of the service of each of various programs configured with video information, sound information, character information, etc. The service additional information 3 is broadcasted in prior to, for example, contents C [contents of a program, contents of a CM (Commercial Message) accompanying with the program, and information corresponding to contents data of other various information] in an operation of the broadcasting system of this invention. Differently from the above example, there is a case where the contents C and the service additional information 3 are multiplexed together with various programs and broadcasted in one communication route. Further, the various programs may be transmitted in analog signals, whereas the contents data of the service and the service additional information may be transmitted in digital signals.

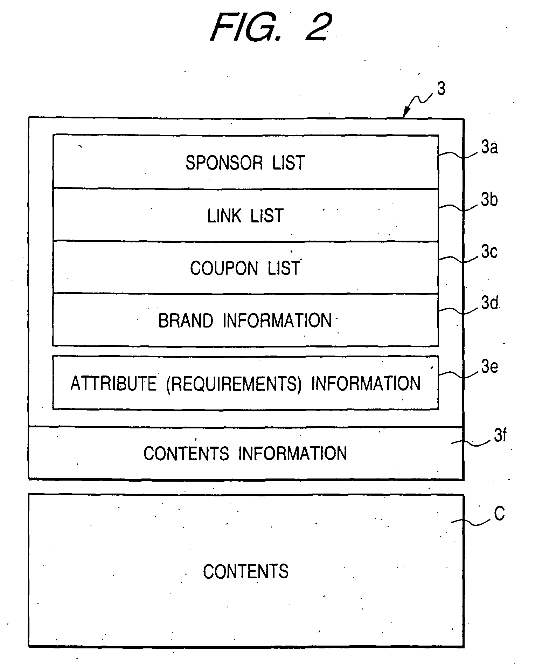

The service additional information 3 is used to make data for broadcasting a program broadcast, which includes a sponsor list 3a, a link list 3b, a coupon list 3c, brand information 3d, attribute information 3e and contents information 3f, as shown in FIG. 2. The sponsor list 3a is data indicating a name of sponsor relating to the service in a form of list. The link list 3b is data representing other service relating to this service, where a plurality of services may correspond to one service as relating services. The coupon list 3c represents a coupon attached to the service. "Coupon" is used to discount a service according to a record of use in the past or the like of the user (viewer) if the service is charged. For instance, certain points are given to the user, and the user holds them. In the coupon list 3c, there is stored information such as a kind of the coupon applicable to the service and the like when the service additional information 3 is made. The brand information 3d represents a producer, a provider of the program or an industry assuring the service, etc. The attribute information 3e is basically data representing age, sex, residential area of the viewer, and also includes data such as a record of view, a record of operation of the viewer. The attribute information 3e relates not only to the viewer, but the attributes can be determined on the basis of contents of the service. Namely, the attribute information 3e can represent that the service is to provide a sports game, or the service belongs to a class of action movies. The contents information 3f is data representing contents of the service of the program. The contents C corresponding to the service additional information 3 is configured with elements constituting the program, which include various data such as detailed multi-media information of the program, preview, main program, CM, questionnaire, mail, application program, coupon information, etc.

In FIG. 2, there is schematically shown an example where the service additional information 3 and the contents C are separately received, then corresponded to each other to be integrally edited. The service additional information 3 and the contents C in the above form are stored in a storage 4 of a receiving terminal apparatus, maintained and managed therein.

The contents C are transmitted as a broadcast services over an exclusive channel 1 or 2. The receiving terminal apparatus selects service additional information judged to be necessary according to setting by the terminal user (user) among service information transmitted in prior, corresponds the selected service additional information and the contents one-to-one, and stores them in the storage 4 incorporated in the receiving terminal apparatus (refer to a storing process stage 5 of "the service additional information" shown in FIG. 1). The service additional information selected and stored is managed and maintained by a resident demon program in the receiving terminal apparatus. The program updates the data when receiving information to be partially replaced, links relating information desirably to the user, manages the data so as to quickly react when called out by, for example, a viewer application, or discards unnecessary data (refer to a managing-maintaining process stage 6 in "the service additional information" in FIG. 1). The service additional information 3 transmitted in the storing process stage 5 of "the service additional information" is partially changed in the managing-maintaining process stage 6 of "the service additional information", and stored in the storage 4. Incidentally, there is a case where the service additional information 3 has its own contents C.

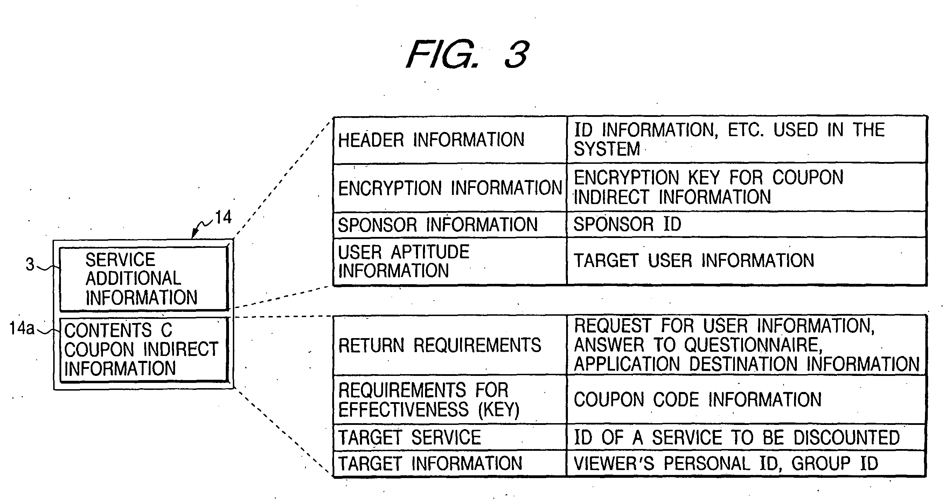

Now, description will be made of a data structure of coupon information used in this invention. FIG. 3 shows a data structure of coupon information transmitted from the center. In FIG. 3, reference numeral 14 denotes coupon information (send coupon information) made into a format when transmitted. The coupon information 14 is configured with coupon indirect information 14a as the contents C and the service additional information 3. The coupon indirect information 14a cannot yet function and cannot be now used, which practically includes various information, as return requirements, such as a request for user information, an answer to a questionnaire, information about a destination of an application, etc., coupon code information, as requirements (that is, a key) for the coupon indirect information 14a to be effective, that is, for the coupon to be able to be used, an ID of a service to be discounted as a target service, a viewer's personal ID and a group ID as target information. The service additional information 3 includes ID information used in the system as header information, an encryption key used for the coupon indirect information 14a as encryption information, a sponsor ID as sponsor information and target user information as user aptitude information.

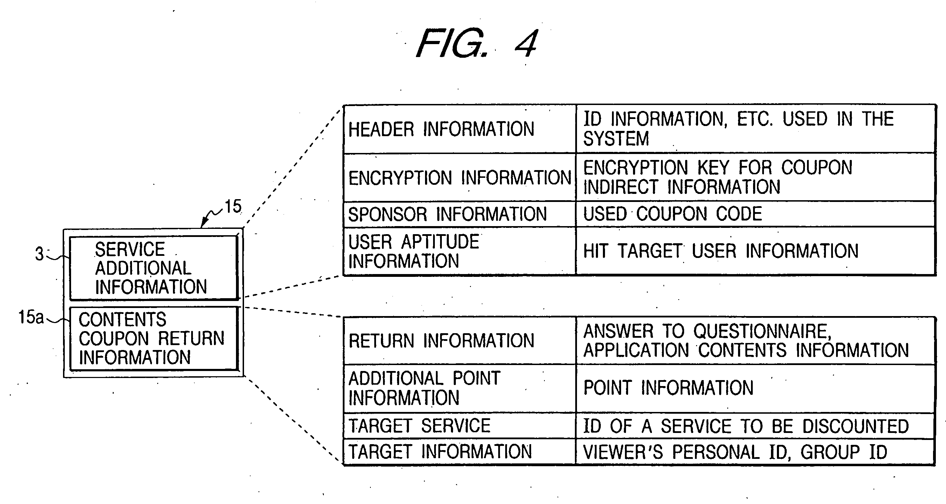

The coupon information includes data to be returned from the user to the center. FIG. 4 shows such coupon information. FIG. 4 is a diagram showing a data structure of the coupon information to be returned from the user to the center. In FIG. 4, reference numeral 15 denotes the coupon information (return coupon information) made into a format when the coupon information is returned. The return coupon information 15 is configured with coupon return information 15a as the contents C and the service additional information 3. The coupon return information 15a practically includes various information such as an answer to a questionnaire as return information, information about contents of an application, etc., point information as additional point information, an ID of a service to be discounted as a target service, a viewer's personal ID and a group ID as the target information. The service additional information 3 includes ID information and the like used in the system as header information, an encryption key used for the coupon indirect information as encryption information, a sponsor ID as sponsor information and target user information as user aptitude information.

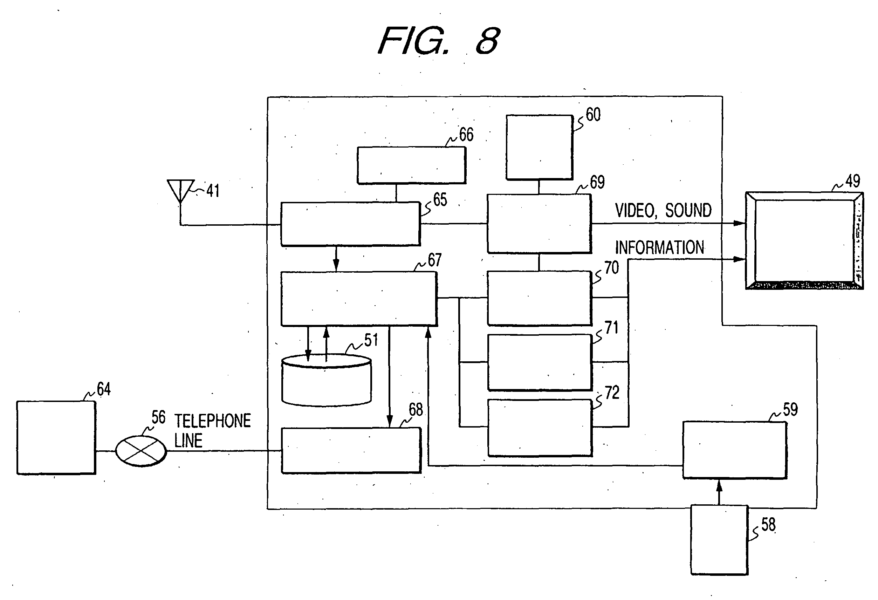

The service additional information 3 relating to a relevant broadcast stored in the storage 4 is picked up and read out from the storage 4 when necessary, and overlaid and displayed, or blended with a background and displayed, on a screen of a display unit 7. Reference numeral 8 in FIG. 8 denotes an automatically displaying process stage of "the service additional information" while a golf relay program is broadcasted, where the user can refer a present score of an appearing player by operating a remote controller, display analytic video of a swing of the player, or display detailed information of a golf club used in the game, independently from the program being now broadcasted.

In the above case, it is possible to generate a trigger at a predetermined timing by the broadcast program, not by retrieval through an remote control operation by the user, to automatically call out relating information, and display it. For example, it is possible to display a direction of a wind in the golf course, or a score of another player, with narration. Using this technique, it is also possible to pack the service additional information relating to a CM as the service additional information 3 and a main program of the CM into the service additional information 3. It is still also possible to display CM video which is incorporated contents of the service additional information 3 stored in the storage 4 (which may be a local disk) instead of CM video of this broadcast. For instance, if an automobile is advertised while a certain program is broadcasted, it is possible to replace data of dealer information to be referred to by the user with data of a dealer conforming to each area selected from the service additional information 3 although the video screen of the advertisement is the same.

Next, description will be made of an example where the service additional'information 3 is accessed by referring to a program guide table, and used. Reference numeral 9 in FIG. 1 denotes a program guide displaying process stage using "the service additional information". In which, the service additional information 3 for program guide is read out through an operation by the user so that a program guide table 10 is displayed on the display unit 7. As the program guide table 10, there has been developed ones which can provide program guide table data intelligibly, interactively and with a better operability, using a viewer software on the receiver terminal apparatus's side (Gem Ster, Star Sight, etc., for example). However, these known program guide tables can express detailed information only with characters in a table. According to this invention, it is possible to pack, as the service additional information, information relating to a program, link information linked with program information in the program guide table, a preview as the contents and the like into the service additional information 3. Whereby, it is possible for the user to interactively access to the preview from the program guide table 10 so that information useful to select a program by the user is enriched.

It is also possible to retrieve the service additional information 3 itself to display and use it. Reference numeral 11 in FIG. 1 denotes a retrieval display processing stage of "the service additional information", where a state where the service additional information 3 is read out through an operation by the user, and displayed on the display unit 7. In which state, not only the contents C but also details of the service additional information 3 such as the link information, the sponsor information, the coupon information, etc. can be accessed and displayed on the display unit 7. The link information is described in the service additional information 3 displayed in the retrieval displaying process stage 11 of "the service additional information". By tracking the link information', it is possible to search another service additional information so as to fulfil a function of a service navigator. When the link information is tracked down, it is possible to directly fetch another service additional information from an information source using a modem equipped to the receiving terminal apparatus if that service additional information does not exist in the storage 4.

It is further possible to set (or enclose) an application program as the contents C. In which case, the receiving terminal apparatus can read the service additional information 3 in which the application program is enclosed, and execute the application program (an application displaying process stage 12 using "the service additional information"). Contents of the process executed by the application program are various. For instance, an on-line TV shopping is displayed in the application displaying process stage 12 using "the service additional information".

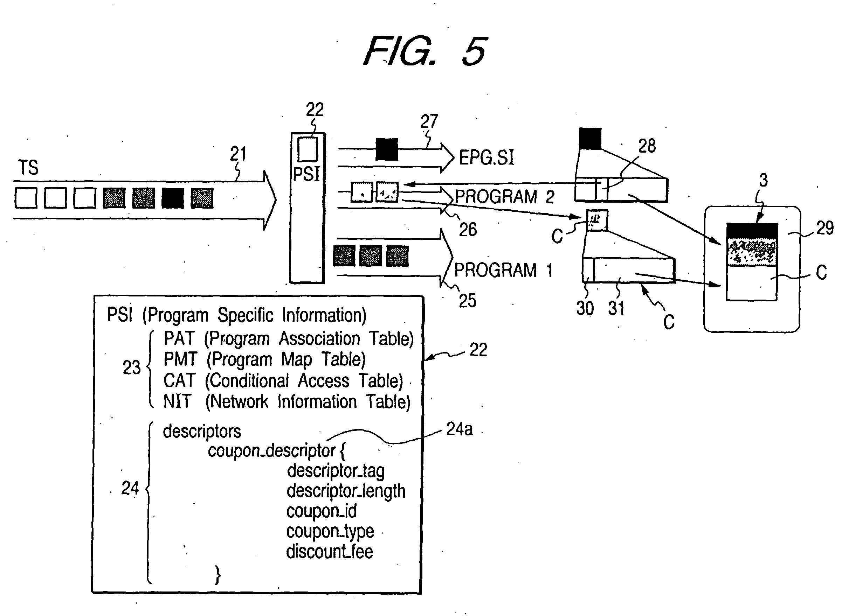

FIG. 5 is a diagram showing a data structure of the coupon information when the coupon information is broadcasted as broadcast data, and a manner of taking out the coupon information. In FIG. 5, reference numeral 21 denotes a transport stream (hereinafter, referred simply as a stream) which is data used in digital broadcasting. In one stream 21, packets of multiplexed service information mixedly exist. Among which, PSI (Program Specific Information) denoted by reference numeral 21 defines contents of the entire stream 21. The PSI 22 is configured with a table group 23 and descriptors 24. The descriptors 24 include various descriptors such as a coupon descriptor 24a, etc. By analyzing contents of definition of each of the descriptors 24, it is possible to discriminate each packet configuring the coupon information. FIG. 5 shows a state where the first coupon 25 as a program 1, the second coupon 26 as a program 2, and other data 27 as the program guide table (EPG), the service information (SI) and the like are taken out from the packet. In this example, the service additional information 3 is defined as the descriptor 24 of the service information SI. Contents of the service additional information 3 include pointer information 28 representing the contents C. Contents indicated by the pointer information 28 are the contents C. The contents C include a header 30 and a main body of the contents 31. The information of the descriptors 24, information generated in the receiving terminal apparatus are combined as the service additional information 3, and further combined with the contents C to make a package 29 for broadcast service, and stored in the storage 4 (or the local disk).

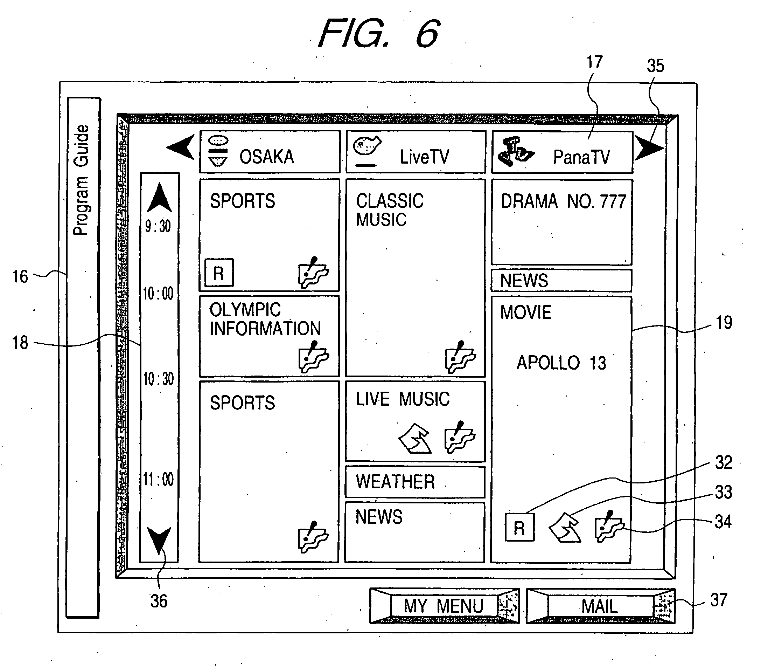

FIG. 6 is a diagram showing an example of a display of contents of the above program guide table (EPG) 16 on the display screen. In the program guide table, a broadcasting station 17 providing various programs is displayed on the top, an air time 18 on the left, and each program 19 to be broadcasted from each broadcasting station on the bottom. In each section of the display of each program 19, various marks 32, 33 and 34 are attached. The mark 32 indicates that a relevant service (program) is reserved. The mark 33 indicates that the relevant service (program) has a coupon. The mark 34 is an indicator showing that the relevant service (program) has multi-media detailed information (such as a digest, a preview, etc.). Arrows in the left and right directions displayed on the both sides in the columns of the broadcasting stations 17 are scroll marks used to display another broadcasting station on the screen. Arrows 36 in the up and down directions displayed on the top and bottom sides in the column of the air time 18 are scroll marks used to display another air time on the screen. Reference numeral 37 denote an operation button for activating a switching of a display on the screen. By clicking each of the operation buttons 37, the user can switch the screen 7.

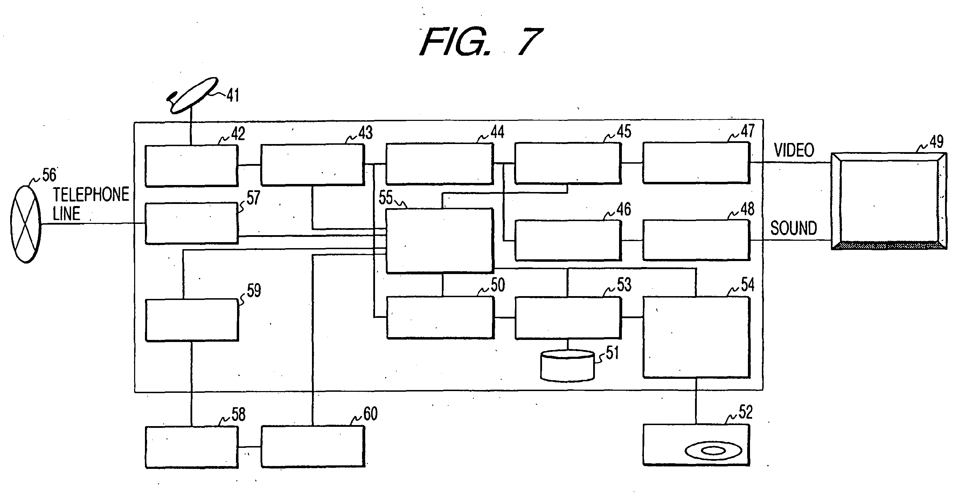

FIG. 7 is a block diagram showing a structure of an information broadcast receiving terminal apparatus 40 incorporated in a broadcasting system according to this invention. As the information broadcast receiving terminal apparatus 40, a multi-media storing-displaying apparatus is used, for example. In the above broadcasting system, the information broadcast receiving terminal apparatus 40 has mainly a function as a receiving terminal. Simultaneously, the information broadcast receiving terminal apparatus 40 can be used as a transmitting terminal for transmitting the viewer attribute information, the viewer record information and the return coupon information 15 to the center if necessary. In FIG. 7, reference numeral 41 denotes an antenna for receiving the broadcast, 42 a tuner for tuning with a received radiowave to detect signals, 43 a descrambler for decrypting cipher of the received signals, 44 a transport for selecting necessary information among the received data and taking out it, 45 an MPEG video decoder for decoding video data included in the information taken out by the transport 44 and generating compressed video data, 46 an MPEG sound decoder for decoding sound data included in the information taken out by the transport 44 and generating compressed sound data, 47 an NTSC converting unit for expanding digital data compressed by the MPEG video decoder 45 and converting the digital data into analog video signals to be displayed as video, 48 a D/A converting unit for expanding the digital data compressed by the MPEG sound decoder 46 and converting the digital data into analog audio signals to be output as sound, and 49 a displaying apparatus for displaying video signals and the audio signals obtained through the converting processes conducted in the NTSC converting unit 47 and the D/A converting unit 48, or outputting them.

Reference numeral 50 denotes a transport for selecting data among the information broadcasted as data, taking it out and transferring it to a storage apparatus, 51 a disk apparatus in which the received broadcast data is stored and accumulated, 52 a secondary storage apparatus as an external storage medium set separately from the disk apparatus 51, in which the received broadcast data is stored and accumulated, 53 an internal HDD interface for matching operations with another function unit in order to store the data in the disk apparatus 51, 54 an external secondary storage apparatus interface for matching operations with another function' unit in order to store the data in the secondary storage apparatus 52, 55 a data process controlling unit having various data such as programs for receiving broadcast data and processing the data, a viewer program for characters, etc., which has an MPU and a main storage, 56 a public telephone line, 57 a modem connected between the public telephone line 56 and the data process controlling unit 55 to modulate/demodulate transmit/receive data, 58 a remote controller for giving an instruction to the information broadcast receiving terminal apparatus 40 to remotely control the same, 59 a man-machine interface for transmitting/receiving signals to/from the remote controller 58 to transmit the signals to the data process controlling unit 55, and 60 an IC card connected to the data process controlling unit 55 to execute various operations. The data process controlling unit 55 stores a cipher decrypting means, that is, a program, for decrypting the encrypted coupon information stored in the internal main storage. Incidentally, the cypher encrypting program may be stored in the IC card 60.

FIG. 8 is a block diagram showing a structure (hardware and software) used to execute processes on a coupon in the information broadcast receiving terminal apparatus 40 with the hardware structure shown in FIG. 7. In FIG. 8, reference numeral 41 denotes the antenna, 49 the displaying apparatus, 51 the disk apparatus as a storage apparatus/medium, 56 the public telephone line, 58 the remote controller, and 60 the IC card. Operating units of the above parts are the same as those shown in FIG. 7. Reference numeral 65 denotes a reception controlling-filtering unit for receiving broadcast data through the antenna 41, 66 a viewer attribute managing unit for accumulating and managing viewer attributes of the user of the information broadcast receiving terminal apparatus 40, 67 a coupon information accumulating-managing unit for accumulating the coupon information received over the broadcast in the disk apparatus 51, and reading out therefrom to manage the same, and 68 a line controlling unit for conducting a control operation to transmit/receive a coupon over the public telephone line,56. The line controlling unit 68 is served to connect the information broadcast receiving terminal apparatus 40 to a data totalizing apparatus 64 such as a charge/viewer record totalizing server, a coupon collecting/totalizing server or the like in the center over the public telephone line 56.

Reference numeral 69 denotes a conditional access controlling unit/security module for executing a data processing operations in the MPEG video decoder 45, the MPEG sound decoder 46, the NTSC converting unit 47 and the D/A converting unit 48, 70 a mail browser for processing data received over the broadcast or a telephone line, 71 a coupon browser for revealing a coupon from the coupon indirect information or executing various processes on the coupon, and 72 the electronic program guide (EPG) received over the broadcast.

Hereinafter, description will be made of various operations of the broadcasting system and the information broadcast receiving terminal apparatus 40 with the above structures. Kinds and features of coupons used in an interactive TV system according to this embodiment are tabulated below:

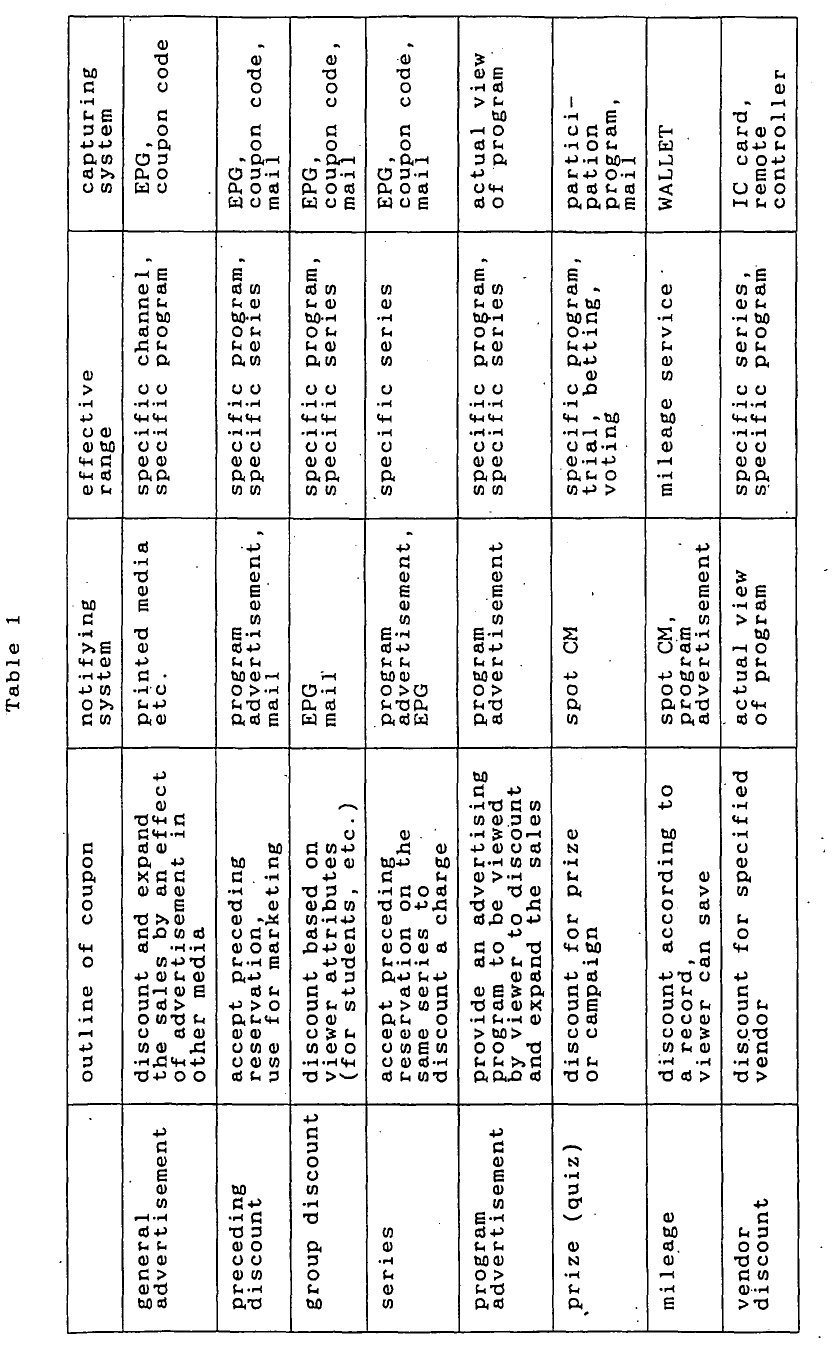

In Table 1, "outline of coupon" shows distinctive attribute of each coupon. "Notifying system" shows a means and a manner of notifying the coupon to the user. "Effective range" 'shows objects to which the coupon can be applied (a program or series to which the coupon can be applied). "Capturing system" shows a key or an operation/action to be taken by the user to reveal the coupon information (coupon indirect information) not yet revealed as the coupon.

### (a) Description of First Embodiment

Here, operation of sending and receiving the coupon information over the broadcast will be described. In the broadcasting system including a service providing apparatus and the information broadcast receiving terminal apparatus 40, the service providing apparatus encrypts the coupon indirect information 14a, which is discount information which can generate effective coupon, and inserts it into the coupon descriptor 24a configuring the service information data, and broadcasts it.

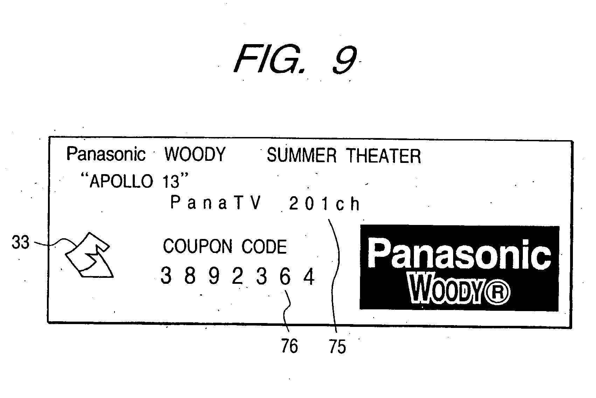

The format shown in FIG. 3 is used at this time. The information broadcast receiving terminal apparatus 40 accumulates the received coupon indirect information 14a in the disk apparatus 51, and manages it by the coupon information accumulating-managing unit 67. As described hereinbefore, the send coupon information 14 received over the data broadcasting has the coupon indirect information 14a not revealed as the contents C. On the other hand, the coupon provider notifies a coupon code to the user, using an arbitrary media such as another TV program, news paper, radio, magazine, catalog, combination of these, etc. FIG. 9 shows an example of the above coupon code described in a printed media such as news paper, magazine, or the like in order to notify the coupon code to the user, where the coupon code is clearly described along with a program name when the service provider, for example, inserts a commercial in the news paper or the like.

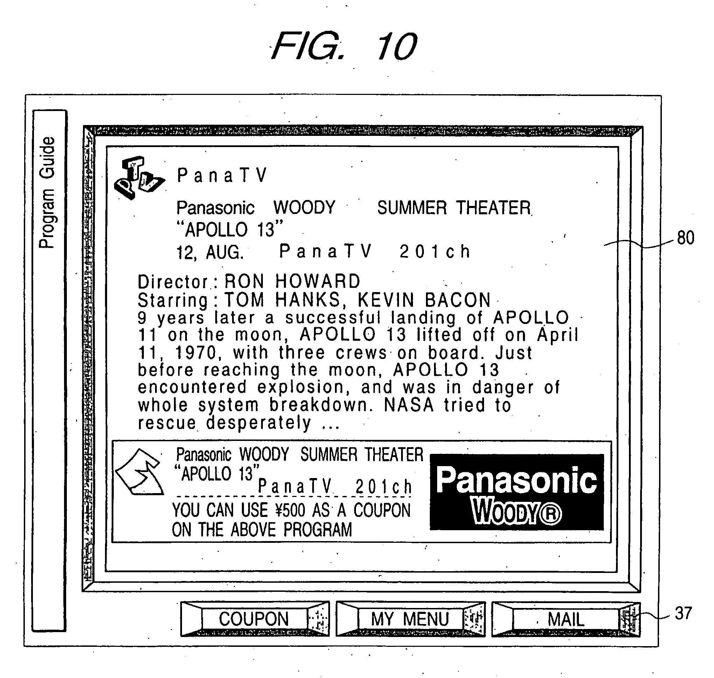

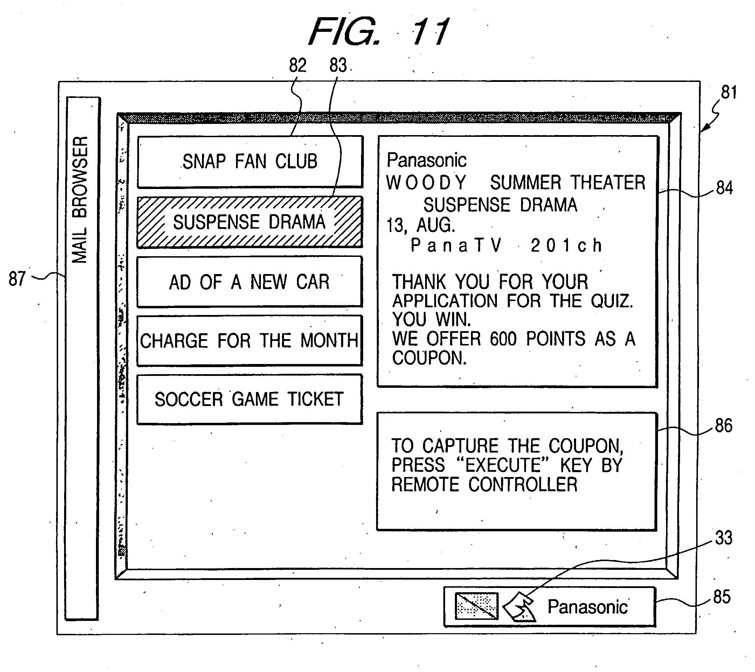

After that, when the user operates the EPG screen 16 displayed on the displaying apparatus 49 to retrieve a program, a program guide detail screen 80 as shown in FIG. 10 is displayed. If a coupon is attached to the program, a message to capture the coupon is displayed. When the user operates the information broadcast receiving terminal 40 to answer a questionnaire (including an answer to a quiz, etc.) in the broadcast, data of a direct mail or a guide mail is transmitted from the mail browser 70 to the displaying apparatus 49, a mail browser screen 81 as shown in FIG. 11 then appears. In the mail browser screen 81, reference numeral 82 denotes a list of received mails, 83 a mail selected to be currently displayed, 84 a display region for contents of the selected mail, 85 an indicator indicating that there is information attached to the mail, at which a name of sender is displayed, 33 the above-mentioned coupon mark representing that the coupon is attached, 86 a message region into which the coupon is captured, and 87 a title display region, which is also used as a selecting instruction button for other viewer functions.

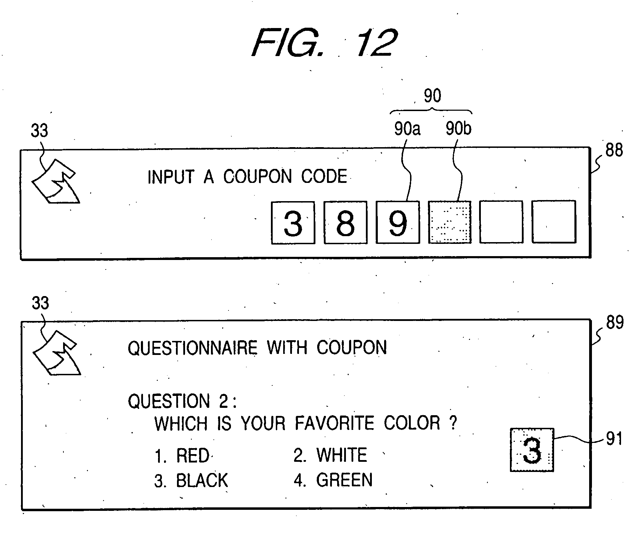

When the user operates the information broadcast receiving terminal apparatus 40 to capture the coupon according to an instruction displayed in the message region 86 for capturing the coupon, a window instructing to input a coupon code as shown in FIG. 12 appears on the screen of the display apparatus 49. FIG. 12 shows a window used by the user to input a coupon code or an answer to a questionnaire or a quiz. In FIG. 12, reference numeral 88 denotes a message instructing to input a coupon code, 89 a question in the questionnaire and a message instructing to answer, 90 input digit positions to which the coupon code should be inputted, 90a denotes digit positions in which figures have been inputted, and 90b a digit position in which a figure is being now inputted. Reference numeral 91 denotes a column to which the answer to the questionnaire should be inputted, where a numerical value "3" has been written. When the user operates the remote controller 58 to input the coupon code, the input code number becomes a key, the coupon indirect information 14a is decoded through a cipher decrypting process conducted in the information broadcast receiving terminal apparatus 40, the coupon information received and accumulated in the information broadcast terminal apparatus 40 becomes effective, and the coupon information is displayed as a coupon visible to the user on the EPG screen 16 (refer to FIG. 6) or the program guide detail screen 80 (refer to FIG. 10), whereby the user can receive a discount service.

### (b) Description of Second Embodiment

Here, description will be made of operations of sending and receiving the coupon information over the broadcast, and an operation of capturing the coupon on the basis of the user aptitude information designated in the coupon information. In the broadcasting system according to this invention, the service providing apparatus encrypts the coupon indirect information 14a, which is discount information being able to generate an effective coupon, inserts it into the coupon descriptor 24a configuring the service information data, and broadcasts it.

The information broadcast receiving terminal apparatus 40 temporarily accumulates the received coupon indirect information 14a in the disk apparatus 51, and manages it by the coupon information accumulating-managing unit 67. Upon which, the coupon information accumulating-managing unit 67 in the information broadcast receiving terminal apparatus 40 judges whether the user meets requirements designated as the user aptitude information shown in FIG. 3 or not. If the user meets the requirements designated as the user aptitude information, the coupon information accumulating-managing unit 67 inquires of the user about whether the coupon is captured or not. Whereby, it is possible to deliver the coupon to the user who has been narrowed down as a target.

### (c) Description of Third Embodiment

Here, description will be made of operations of sending and receiving the coupon information over the broadcast, and an operation of capturing the coupon using a wallet function on the basis of a coupon code and receiving it. In the broadcasting system of this invention, the service providing apparatus encrypts the coupon indirect information 14a, which is discount information being able to generate an effective coupon, convert it into the coupon descriptor 24a configuring the service information data, and broadcasts it. The information broadcast receiving terminal apparatus 40 temporarily accumulates the received coupon indirect information 14a in the disk apparatus 51, and manages it by the coupon information accumulating-managing unit 67.

When a charged program, a'CM or a program advertisement is broadcasted after that, the service providing apparatus broadcasts a coupon code along with it. The information broadcast receiving terminal apparatus 40 reads out the accumulated coupon indirect information 14a from the disk apparatus 41 into the data process controlling unit 55, and decrypts the coupon indirect information 14a using the received coupon code by a cipher decrypting means in the information broadcast receiving terminal apparatus 40 to make the coupon effective. Whereby, a view record coupon issued by viewing the program can be retained in a wallet tool of the user viewing the service on the information broadcast receiving terminal apparatus 40. A wallet function of the information broadcast receiving terminal apparatus 40 is originally provided for a purpose of confirmation of use of a charged channel or management of receipts issued upon shopping. Accordingly this invention, the wallet function is expanded, whereby a coupon is retained using the wallet function.

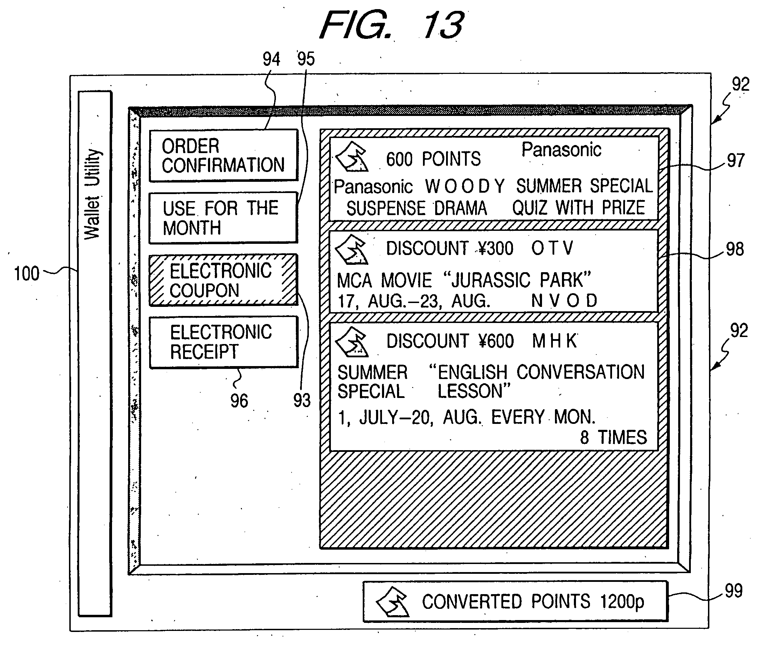

FIG. 13 is a diagram showing an example of a screen 92 displaying the wallet function of the information broadcast receiving terminal apparatus 40. In FIG. 13, reference numeral 93 denotes a button used to select en electronic coupon retained in an electronic coupon retaining tool, which is one of functions of the wallet function. Reference numeral 94 denotes an order confirming button, as another button, and 95 a button for checking use in this month, and 96 an electronic receipt button. When the electronic coupon selecting button 93 is pressed, video showing items of each coupon is displayed. In the video, reference numeral 97 denotes a coupon display as a prize awarded by answering a quiz, where a coupon of "600 points" is declared as the awarded prize. Reference number 98 denotes a display of a coupon obtained by inputting a coupon code suggested in a CM, where a coupon of "300 yen" is declared. Reference numeral 99 denotes a display of an accumulation of points obtained by converting each coupon expressed in a different unit of accumulation. Reference numeral 100 denotes a title display region of the wallet function, which is also used as the selecting instruction button for other viewer functions.

### (d) Description of Fourth Embodiment

Here, description will be made of operations of linking the coupon information to a DM (Direct Mail) and broadcasting them, then capturing the data on the user's side. In the broadcasting system of this invention, the service providing apparatus links a descriptor delivering a DM to the coupon descriptor 24a delivering a coupon by a linkage descriptor describing a relation between different services to attached the coupon to the DM, thereby sending a mail addressed to an individual over the broadcast. In the DM, it is possible to designate attributes of a target user in the send coupon information 14 shown in FIG. 3 at this time. When the coupon indirect information 14a is encrypted and inserted, a personal viewer ID or a group ID is written as target information, attributes (age, sex, residential area, etc.), or target user information is written as the user aptitude information of the service additional information 3. Whereby, it is possible to deliver the DMs, narrowing down user groups to some degree.

In the information broadcast receiving terminal apparatus 40, the coupon indirect information received along with the DM is temporarily accumulated in the disk apparatus 51, and managed by the coupon information accumulating-managing unit 67. When receiving the DM, the user operates the information broadcast receiving terminal apparatus 40 to capture a coupon according to the message 86 for capturing the coupon in a manner similar to that described before with reference to the mail browser screen 8 in FIG. 11 so that the message region 88 instructing to input a coupon code as shown in FIG. 12 appears on the screen 7 of the displaying apparatus 49. The user thereby can take out the coupon along with a mail message of the DM. If the user decides that the coupon is unnecessary when watching the message of the DM, the coupon is cancelled, and is thus not settled. On the other hand, when the user operates the information broadcast receiving terminal apparatus 40 to capture the coupon, the user can reserve a relevant program, and the coupon is reflected simultaneously.

In a different manner of making the coupon information on the center's side, it is possible to instruct the information broadcast receiving terminal apparatus 40, which is a receiver on the user's side, to conduct a control so as to preferentially display an advertisement of a sponsor included in the coupon information.

By actually using the coupon by the user, the return coupon information 15 is generated in the information broadcast receiving terminal apparatus 40. A personal viewer ID (namely, a user ID) and a group ID as the target information, general attributes, and an ID of a service which is an object to be discounted as the target service are incorporated in the return coupon information 15, as the coupon return information 15a which is the contents as shown in FIG. 4, then the service additional information 3 is attached. The center can collect it as marketing data along with the coupon when the charge is settled.

It is also possible to issue a coupon effective to only users having a specific keyword, using taste information deduced and accumulated on the basis of attribute information and a past view record of the user accumulated in the viewer attribute managing unit 66 in the information broadcast receiving terminal apparatus 40, whereby the user can use a coupon as a group discount. Owing to this function, it is possible to carry out a service to make a coupon effective under requirements that the user is a student or the user is a continuous viewer.

### (e) Description of Fifth Embodiment

Here, operations of reserving a program by a user, and transferring reservation information along with the a coupon to another user. A user (here referred as a user A) operates the EPG of his/her information broadcast receiving terminal apparatus 40 to make a reservation of a program. Generally, reservation information is stored in the disk apparatus 51 or a main storage of the data process controlling unit 55 of the information broadcast receiving apparatus 40, whereby a program is received at a corresponding time, or stored in the disk apparatus 51. According to this embodiment, the reservation information and a coupon possessed by the user,A are transferred to another user (here, referred as a user B).

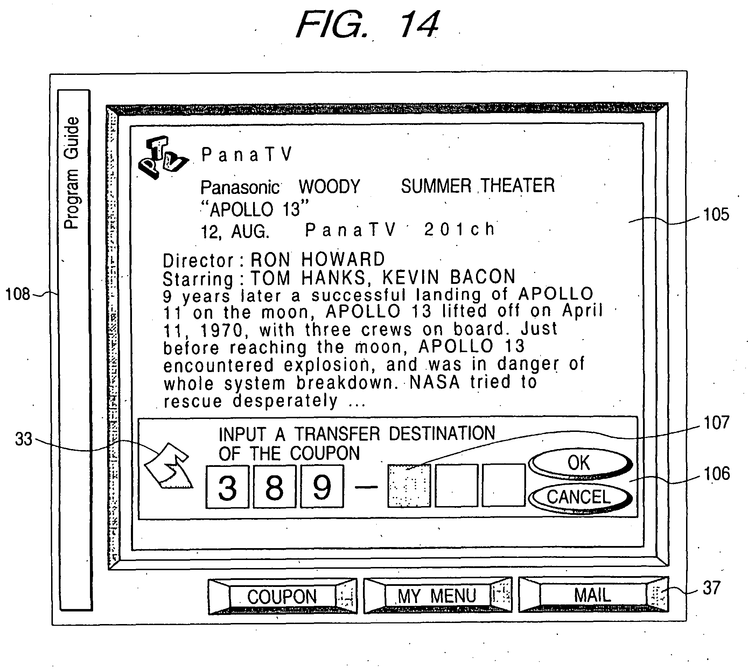

FIG. 14 illustrates the above receiving and transferring operations. In FIG. 14, reference numeral 105 denotes a display region of a CM of the reserved program, and 106 an example of a display of a window used to set a transfer destination of the reservation information, into which the user A inputs an apparatus number (ID number, telephone number or the like) of the user B who is the transfer destination. Reference numeral 107 denotes an example of a manner of inputting the ID of a receiving terminal apparatus of the transfer destination. Reference numeral 108 denotes a title display region of the EPG, which is also used as the selecting instruction button for other viewer functions. The information broadcast receiving terminal apparatus 40 sends the reservation information obtained by making a reservation of a program by operating a screen of the EPG as above and the ID 107 of the receiving terminal apparatus of the transfer destination to the service providing apparatus over an up-line of the public telephone line 56. A coupon is attached to the reservation information. The service providing apparatus sends the program reservation, information and the coupon information to the information broadcast receiving terminal apparatus 40 of the user B.

A manner of taking out the coupon on the receiving side is similar to the fourth embodiment. The user B who is a destination of the transfer can take out the coupon together with the program reservation information. Since the user B is given a right of program reservation with a coupon from the user A, the user B can view the reserved program free (or at a charge discounted to almost free). It is possible to transfer a right to reserve a specific program to view it and a right to use a coupon from one user to another user as above so that a user can present a program with a coupon to another user as one form of present such as a birthday present, a Christmas present or the like. If the user B who is the transfer destination considers that the program is unnecessary after watching a CM of the reserved program and finally does not view, the coupon is cancelled, and is thus not settled. Upon an operation of capturing the coupon, if the user on the receiving side follows a setting of "automatically capturing a send coupon into the EPG", a reservation registration is done without a trouble of capturing the coupon. As a result, it is possible to operate the EPG from one receiving terminal apparatus to reserve a program, and send and transfer the reservation information to another receiving terminal apparatus. If a user possesses a plurality of receiving terminal apparatus, it is thereby possible to concentrate charges upon one receiving terminal apparatus.

### (f) Description of Sixth Embodiment

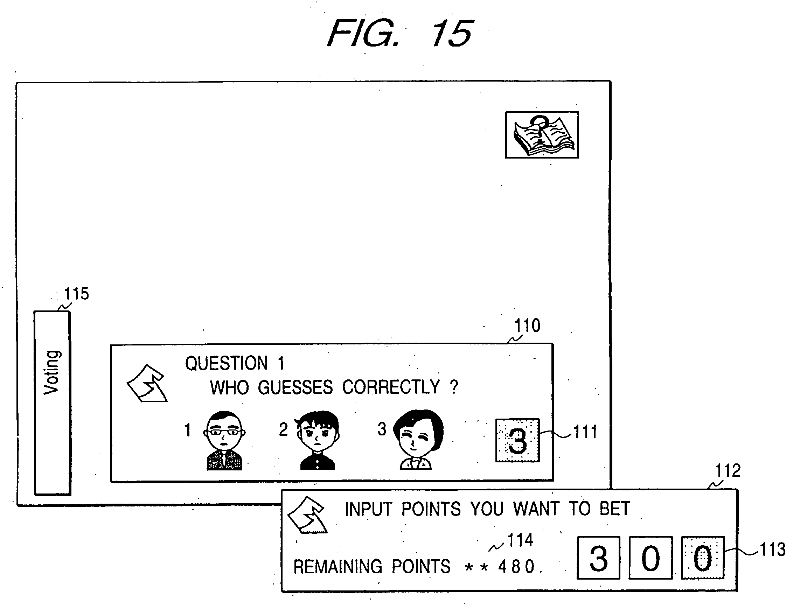

Here, description will be made of operations conducted when the user votes with his coupon as a fund in a participation program, and settles according to a result of the voting. In the broadcasting system of this invention, the service providing apparatus collects results of voting by the users using a voting descriptor configuring the service information data, thereby proceeding a program. According to this embodiment, the user bets points in the voting using a GUI with points possessed by the user as his/her holding, as shown in FIG. 15. The information broadcast receiving terminal apparatus 40 makes the return coupon information 15 as vote data on the basis of the betting of points by the user, and inserts additional point information in its coupon return information 15a. The information broadcast receiving terminal apparatus 40 sends the coupon return information 15 to the service providing apparatus over an up-line of the public telephone line 56, whereby the user can vote, adding the points.

The center collects a vote from each of the information broadcast receiving terminal apparatus 40 through a process by the application program for collecting votes, judges correctness of answers, collects answers to the questionnaire, holds a lottery, after that, sends back a direct mail with a coupon to each of prize winners. The information broadcast receiving terminal apparatus 40 receives a restored coupon (or points).

FIG. 15 is a diagram illustrating an example of the above operations conducted on a screen for voting with points. In FIG. 15, reference numeral 110 denotes a display of a question window, where the user votes to one of a plurality of panelists (panelist 1, panelist 2 and pane'list 3) appearing in a program (a suspense drama with a quiz to guess a criminal). Reference numeral 111 denotes an answer region into which an answer to the question should be inputted, where "3" is inputted as an answer being now inputted. Reference numeral 112 denotes a window used to input points betted by the user, in which a region 113 used to input points to be betted and a remaining point display region 114 displaying a maximum number of points that the user can bet are displayed. In the point input region 113, "300" which is point being now inputted is displayed, whereas in the remaining point display region 114, "480" which is a number of remaining points is displayed. Reference numeral 115 denotes a display region for a voting application title, which is also used as the selecting instruction button for other functions.

In a known participation program where, for example, a user votes to "guess a criminal", each viewer can answer only once and bet only "one" point in the voting. According to this embodiment, the user can bet any points so long as they are within a range of points that the user has, besides it is possible to weight the voting. In this embodiment, not only it is possible to weight the vote, but also the user can variously vote within a range of points that the user has such that 300 points are betted on the panelist 3, while 100 points are betted on the panelist 1 for caution's sake, in the above quiz to guess a criminal, for example.

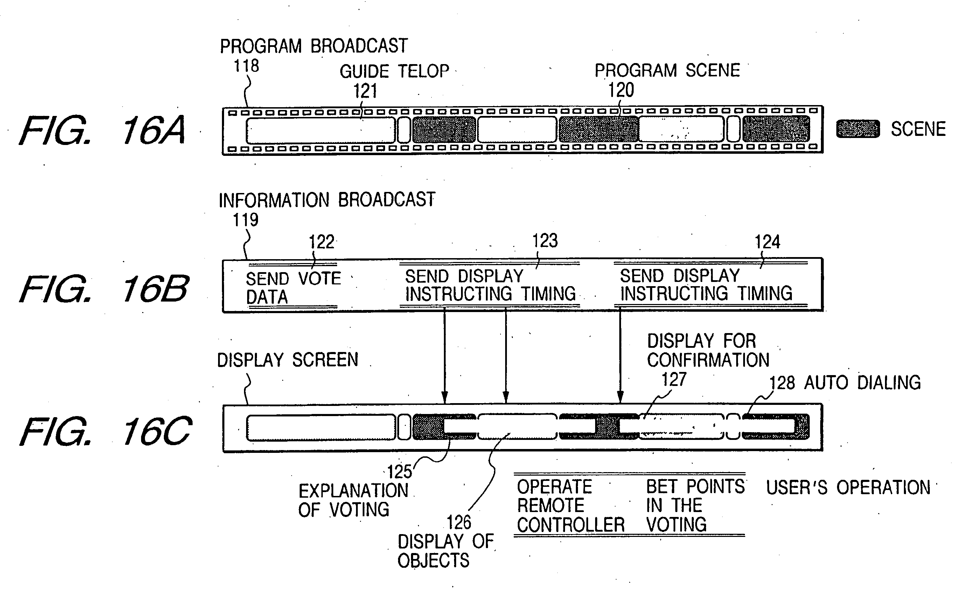

FIGS. 16A through 16C are diagrams for illustrating an operation of voting with points. FIG. 16A shows a program broadcast 118 to be broadcasted along a time axis. FIG. 16B. shows an information broadcast 119 to be broadcasted simultaneously with the above program broadcast 118 along the time axis. In FIGS. 16A and 16B, time passes from the left side to the right side along the time axis. In the program broadcast 118, reference numeral 120 denotes a program scene of this program, and 121 a guide telop incorporated in the program. The guide telop 121 is incorporated between the program scene 120 and the program scene 120 of the program broadcast 118, which notifies that a voting is possible in the information broadcast. The information broadcast 119 includes various data configured with character data and other data, in which send information 122 of vote data, send information 123 of the first display timing and send information 124 of the second display timing are incorporated. FIG. 16C shows a state of a display on the screen 7 in the displaying apparatus 49 when the program broadcast 118 and the information broadcast 119 are broadcasted (or regenerated). In FIG. 16C, reference numeral 125 denotes a display of explanation of the voting, 126 a display of objects to be selected, 127 a display for confirmation, and 128 a display of auto-dialing.

The user who is a viewer votes using a remote controller on the display of the screen 7, then bets points in relation to the voting. The above displays 125, 126, 127 and 128 and the operations are displayed at timings shown along the time axis also shown, similarly to the sending of each data in the program broadcast 118 and the information broadcast 119. Over a channel of the information broadcast' 119, the information 122 with respect to the voting is transmitted in prior to the program broadcast 118, as shown in FIG. 16B. The information broadcast receiving terminal apparatus 40 accumulates vote data in a storage medium of the disk apparatus 51. When the user actually votes after the guidance by the guide telop 121 in the program broadcast 118, a timing to control the display is transmitted over the channel of the information broadcast 119, data supplied over the information channel is overlapped on the screen 7 to commence an application for voting. The voting application progresses independently from the program broadcast 118, whose time limit and the like are controlled by the information broadcast 119. when the viewer finishes voting, the information broadcast receiving terminal apparatus 40 sends out data to the server in the center over an up-line of the public telephone line 56.

When the user votes, it is alternatively possible for the user to vote with a coupon, a prepaid ticket itself or some points of the prepaid ticket. Using the above system, it is possible to discount a charge on a viewer to a half as a result if the viewer gives an answer correctly guessing a criminal in a charged mystery program, or hold an entertainment where viewers can vote with raising funds in a charity program, for example. With this system, it is also possible to give a right to vote to a viewer under requirements that the viewer has a specific effective coupon so that a qualification for admission can be narrowed down.

### (g) Description of Seventh Embodiment

Here, description will be made of an example of use of the IC card 60. In the IC card 60, there are stored information used to identify the information broadcast receiving terminal apparatus 40, key information used to decrypt a scrambled broadcast, etc. The remote controller 58 controls the hardware to adjust a channel or record a program through an operation by the user. By providing ID information of a specific dealer and the like to these peripheral equipments (IC card, remote controller, etc.), the information broadcast receiving terminal apparatus 40 can discriminate a dealer ID. The information of a dealer ID is added when the coupon indirect information 14a transmitted over a broadcast is decoded in a program process in the information broadcast receiving terminal apparatus 40, similarly to the above first and second embodiments, the coupon indirect information 14a can be decoded without inputting a coupon code, or a rate of discount can be changed. For example, when a code is identified as a code of a specific dealer, the user can enjoy a more advantageous discount rate.

## Claims

1. A method for issuing a coupon in a broadcasting system including a service providing apparatus at a center and at least one terminal apparatus, the method comprising the steps of:
configuring contents data of services of each of a plurality of programs, said contents data comprising at least one of video information, sound information and character information for transmission;
providing service additional information comprising attribute information relating to said services;
broadcasting from said service providing apparatus said contents data of said services and said service additional information as data of each of said plurality of programs;
receiving by the terminal apparatus of a viewer said contents data of said services and said service additional information and accumulating the same in said receiving apparatus;
regenerating at least one of said contents data and said service additional information received by said terminal apparatus to provide additional services on the basis of said service additional information when said viewer views said program;
broadcasting coupon indirect information used to issue a coupon corresponding to one of the contents data of said services from said service providing apparatus of said center, said coupon indirect information alone being incapable of use for issuing said coupon; and
receiving said coupon indirect information by said terminal apparatus and accumulating the same in the terminal apparatus, thereby issuing said coupon.

2. A method according to claim 1, wherein said coupon indirect information includes at least one piece of information corresponding to at least one of the contents data of the services which can issue a coupon, and, when at least one of the contents data of a service within which the coupon direct information corresponds is regenerated in the terminal apparatus, said coupon indirect information is decoded so that coupon information is notified to said viewer.

3. A method according to claim 1 or 2, wherein said services include a direct mail service, said contents data receiving step comprises receiving a piece of the contents data corresponding to the direct mail service from said service providing apparatus, said coupon indirect information includes at least one piece information corresponding to said direct mail service, and when said piece of contents data of the direct mail service is displayed or regenerated in the terminal apparatus, said coupon indirect information is decoded so that coupon information is notified to said viewer.

4. A method according to any one of the preceding claims, wherein when said coupon information is notified to said viewer whether said coupon information is notified to said viewer is judged on the basis of a record of viewer information including at least one of a view or ID, taste information, said record of viewer information being accumulated in the terminal apparatus.

5. A method according to any one of the preceding claims, wherein coupon indirect information includes coupon classification information, and issued coupons are structurally managed in said terminal apparatus.

6. A method according to any one of the preceding claims, wherein when said coupon is used, an amount corresponding to said used coupon is reduced on the basis of use record information accumulated in said terminal apparatus.

7. A method according to any one of the preceding claims, wherein in a pay-per-view service, a coupon designated with said pay-for-view is used, whereby an amount corresponding to said coupon is reduced in a charge.

8. A method according to claim 7 wherein use of said pay-per-view service corresponding to a coupon is reserved by using of said coupon by said viewer.

9. A method according to claim 6, 7, or 8, wherein said has at least two values which are current value and a discount value, and said discount value is subtracted from said current value when said coupon is used.

10. A method according to claim 1, 7, 8, or 9, wherein said coupon has only a current value, whereas said service has a discount value unique to said service, and said discount value given to said service is subtracted from said current value given to said coupon by designating said coupon when said viewer uses said service.

11. A method according to any one of claims 6 to 10, wherein said coupon includes address information of an issuer of said coupon, and personal information of said viewer is notified to said issuer of said coupon when said viewer uses said coupon.

12. A method according to claim 1, wherein said terminal apparatus is connected to said center over a telephone line, and further comprising the steps of:
accumulating in the terminal apparatus, information relating to a use record of said viewer;
adding an amount corresponding to a coupon to be broadcasted to said use record of said viewer;
transmitting from said terminal apparatus to said service providing apparatus by said telephone line, a request thereof, a destination of said coupon, a type of said coupon, an amount of said coupon, and the use record;
broadcasting from said service providing apparatus coupon indirect information corresponding to said request of said viewer in response thereto;
receiving by the information broadcasting information terminal apparatus the transmitted coupon indirect information;
judging by the information broadcast information terminal apparatus whether said coupon indirect information is addressed to itself or not; and
issuing said coupon when said coupon indirect information is addressed to itself based on the coupon direct information.

13. A method according to claim 1, wherein said terminal apparatus is connected to said center over a telephone line, and further comprising the steps of:
managing said service providing apparatus in said center a use record of coupons;
requesting, from said terminal apparatus to said service providing apparatus by said telephone line, to add an amount corresponding to a coupon to the use record of coupons of said viewer when the coupon is used; and
updating by the service providing apparatus the use record of the viewer response to said request.

14. A method according to any one of the preceding claims, wherein said coupon direct information broadcasting step comprises the steps of:
broadcasting said coupon indirect information corresponding to a broadcast program; and
simultaneously broadcasting the broadcast program and a coupon code to be used to issue a coupon corresponding to the broadcast program, and further comprising:
receiving by the terminal apparatus the broadcast program and the coupon code; and
confirming whether the coupon corresponding to the broadcast program is issued in the terminal apparatus based on whether the coupon code is used, thereby researching a view record of the broadcast program.

15. A method according to claim 14, wherein said coupon indirect information includes classification information, and when the view record of said broadcast program is researched, the coupon corresponding to the broadcast program is classified based on the classification information included in said coupon indirect information.

16. A method according to claim 15, wherein said classification information includes information of a sponsor providing said broadcast program, thereby classifying the coupon corresponding to the broadcast program based on the information of the sponsor.

17. A terminal apparatus for receiving information broadcasts for use in a broadcasting system including a center; said terminal apparatus comprising:
a receiving unit for receiving contents data of each of plurality of programs, service additional information relating to services, and coupon indirect information for use in issuing a coupon corresponding to the contents data of said services, said contents data and said service additional information being broadcast from a service providing apparatus provided in said centre, said service additional information being made by said center;
a storing unit for storing the received contents data of services and said service additional information;
said contents data comprising at least one of video information, sound information, sound information and character information:
an information managing unit for asynchronously managing said contents data of services and said service additional information stored in said storing unit;
a regenerating unit for reading at least one of said contents data of services and said service additional information stored in said storing unit at an arbitrary timing to regenerate the at least one of said contents data and said service additional information;
an accumulating unit for accumulating the received coupon indirect information; and
an issuing unit for issuing said coupon on the basis of said coupon indirect information accumulated in said accumulating unit.

18. An apparatus according to claim 17, wherein said coupon indirect information includes at least one piece of information corresponding to at least one of the contents data of the service, said at least one piece of information being able to issue a coupon, and further comprising a notifying unit, when said at least one of the contents data of services is regenerated to be displayed by the regeneration unit, in a case where the at least one piece of the coupon indirect information corresponding to the at least one of the contents data of the services is accumulated in the accumulating unit, wherein said notifying unit notifies information of the coupon corresponding to the at least one piece of information of the coupon indirect information to said viewer.

19. An apparatus according to claim 17 or 18, wherein said services include a direct mail service, said contents data receiving unit has a function for receiving the contents data of said direct mail service broadcasted from the center, said accumulating unit has a function for accumulating said received contents data of said direct mail service, said coupon indirect information includes at least one piece of information corresponding to the direct mail service, said at least one piece of information being able to issue a coupon, and wherein, when said contents data of the direct mail service is regenerated to be displayed by the regeneration unit, in a case where the at least one piece of information corresponding to the direct mail service is accumulated in the accumulating unit, wherein information of the coupon corresponding to the at least one piece of information of the coupon indirect information is notified to said viewer.

20. An apparatus according to claim 17, 18, or 19, further comprising a viewer information accumulating unit for accumulating information about the viewer, and a controlling unit for judging whether the coupon information is notified to the viewer or a coupon is issued on the basis of the viewer information.
